(19) Europäisches Patentamt
European Patent Office
Office européen des brevets

(11) **EP 2 645 129 A1**

(12) **EUROPEAN PATENT APPLICATION**

(43) Date of publication:
**02.10.2013 Bulletin 2013/40**

(51) Int Cl.:
***G01S 19/42*** *(2010.01)*

(21) Application number: **13160983.6**

(22) Date of filing: **26.03.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **31.03.2012 CN 201210092729**
**20.03.2013 US 201313847844**

(71) Applicant: **O2 Micro, Inc.**
**Santa Clara, CA 95054 (US)**

(72) Inventors:
  • **Gao, Ke**
    **610041 Chengdu (CN)**

  • **Liu, Mao**
    **Shanghai, 201203 (CN)**
  • **Zou, Jinghua**
    **610041 Chengdu (CN)**
  • **Zhang, Weihua**
    **610041 Chengdu (CN)**
  • **Wang, Jun**
    **610041 Chengdu (CN)**

(74) Representative: **Lippert, Stachow & Partner**
**Patentanwälte**
**Postfach 30 02 08**
**51412 Bergisch Gladbach (DE)**

(54) **Method and system for navigation**

(57)    Method and system for navigation are disclosed. One or more signals are received. One or more navigation systems are determined. The one or more signals are directed to navigation and sent from the one or more navigation systems. Navigation information associated with the determined one or more navigation systems is obtained based on the one or more signals.

FIG. 2

EP 2 645 129 A1

## Description

RELATED APPLICATIONS

This application claims priority to Chinese Patent Application Number 201210092729.7, filed on March 31 2012 with State Intellectual Property Office of the P.R. China (SIPO), which is incorporated herein by reference in its entirety.

FIELD OF THE PRESENT TEACHING

The disclosure generally relates to the field of navigation technology, and specifically, the disclosure relates to method and system for satellite positioning based on one or more satellite navigation systems.

BACKGROUND

At present time, there are four sets of satellite navigation systems in the world: BeiDou (Compass) satellite navigation system, Global Positioning System (GPS), Global Navigation Satellite System (GLONASS) satellite navigation system, and Galileo satellite navigation system developed by China, United States, Russia, and Europe, respectively. The BeiDou satellite navigation system is self-developed by China and can work independently from other satellite navigation systems.

Conventionally, a receiver can only receive satellite signals from one single satellite navigation system to perform positioning or navigation. However, such the conventional receiver has a relatively low positioning accuracy

SUMMARY

In one embodiment, a method for navigation is disclosed. One or more signals are received. One or more navigation systems are determined. The one or more signals are directed to navigation and sent from the one or more navigation systems. Navigation information associated with the determined one or more navigation systems is obtained based on the one or more signals.

In another embodiment, a system for navigation is disclosed. The system comprises a detection module and a calculation module. The detection module is configured for receiving one or more signals directed to navigation. The detection module is further configured for determining one or more navigation systems from where the one or more signals are sent. The calculation module is configured for obtaining navigation information associated with the determined one or more navigation systems based on the one or more signals.

In still another embodiment, a machine readable and non-transitory medium having information recorded thereon for navigation is disclosed. The information, when read by the machine, causes the machine to perform a series of steps. The steps include receiving one or more signals directed to navigation; determining one or more navigation systems from where the one or more signals are sent; and obtaining navigation information associated with the determined one or more navigation systems based on the one or more signals.

BRIEF DESCRIPTION OF THE DRAWINGS

Features and benefits of embodiments of the claimed subject matter will become apparent as the following detailed description proceeds, and upon reference to the drawings, wherein like numerals depict like parts. These exemplary embodiments are described in detail with reference to the drawings. These embodiments are non-limiting exemplary embodiments, in which like reference numerals represent similar structures throughout the several views of the drawings.

FIG. 1 is a block diagram illustrating an exemplary receiver, in accordance with one embodiment of the present teaching;

FIG. 2 is a flowchart illustrating a method for navigation, in accordance with one embodiment of the present teaching;

FIG. 3 is a flowchart illustrating a process in a method for navigation, in accordance with one embodiment of the present teaching; and

FIG. 4 is a flowchart illustrating an exemplary method for navigation, in accordance with one embodiment of the present teaching.

DETAILED DESCRIPTION

Reference will now be made in detail to the embodiments of the present teaching. While the present teaching will be described in conjunction with these embodiments, it will be understood that they are not intended to limit the present teaching to these embodiments. On the contrary, the present teaching is intended to cover alternatives, modifications and equivalents, which may be included within the spirit and scope of the present teaching as defined by the appended claims.

Furthermore, in the following detailed description of the present teaching, numerous specific details are set forth in order to provide a thorough understanding of the present teaching. However, it will be recognized by one of ordinary skill in the art that the present teaching may be practiced without these specific details. In other instances, well known methods, procedures, components, and circuits have not been described in detail as not to unnecessarily obscure aspects of the present teaching.

The navigation systems in present teaching may include the Beidou (Compass) satellite navigation system, the Global Positioning System (GPS), the GLONASS satellite navigation system and the Galileo satellite navigation system. Each satellite navigation system may include one or more satellites. For example, Beidou satellite navigation system includes 9 Beidou satellites, and will include 30 available satellites by 2020. In the present teaching, the satellites transmitting signals which can be received by a receiver may be called positioning satellites. The signals sent from the positioning satellites may be called satellite signals. For example, if the receiver can receive Beidou satellite signals from 6 Beidou satellites, these 6 Beidou satellites can be called Beidou positioning satellites.

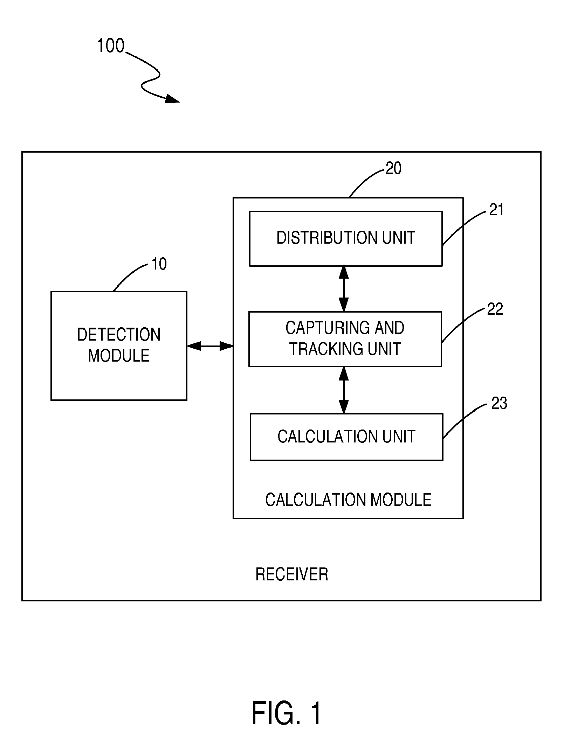

FIG. 1 illustrates a block diagram of a receiver 100, in accordance with one embodiment of the present teaching. In this embodiment, the receiver 100 includes a detection module 10 and a calculation module 20. The detection module 10 may be configured for detecting and/or receiving one or more signals directed to navigation and determining one or more satellite navigation systems from where the one or more signals are sent. The one or more signals may be satellite signals sent from satellites in the one or more satellite navigation systems.

The detection module 10 may detect if the received satellite signals are sent from one or more satellite navigation systems. For example, the detection module 10 may detect the Beidou satellite signals, the GPS satellite signals and the Galileo satellite signals according to an I branch ordinary ranging code of the received satellite signals and may detect the GLONASS satellite signals according to a frequency of the received satellite signals.

The calculation module 20 may be coupled to the detection module 10 and configured for obtaining or calculating navigation information at the receiver 100, based on the one or more signals. The navigation information may be associated with the determined one or more navigation systems. The calculation module 20 may be further configured for calculating a displacement of the receiver 100 corresponding to a clock bias between the receiver 100 and a satellite navigation system, based on the received satellite signals. For example, the calculation module 20 can calculate each displacement of the receiver 100 corresponding to each clock bias between the receiver 100 and each satellite navigation system, based on the received satellite signals. The calculation module 20, in this example, includes a distribution unit 21, a capturing and tracking unit 22, and a calculation unit 23.

The distribution unit 21 may be configured for distributing recourses for the positioning satellites in each detected satellite navigation system. The capturing and tracking unit 22 may be configured for capturing and tracking the positioning satellites with resources distributed by the distribution unit 21 to obtain satellite information from the positioning satellites. The satellite information provided by the satellites may include pseudo range, position coordinate, velocity information and frequency information of the corresponding positioning satellites. The calculation unit 23 may be configured for calculating the navigation information of the receiver, and each displacement of the receiver corresponding to each clock bias between the receiver 100 and each satellite navigation system.

The calculation module 20 can further include an identification unit (not shown in FIG. 1). The identification unit may be configured for identifying redundant positioning satellites in each satellite navigation system according to the received satellite information. For example, the identification unit can identify the positioning satellites that provide the satellite information (e.g., pseudo range and Doppler measurement) with many errors as the redundant satellites. The satellite signals from the identified redundant satellites may be abandoned and not used to calculate the position of the receiver. In one embodiment, the identification unit may identify the redundant satellites according to a method of Receiver Autonomous Integrity Monitoring (RAIM). The identification unit can also identify the redundant satellites according to the output parameters of each receiver loop, e.g., the variation of the carrier frequency, the variation of the pseudo range measurement, etc.

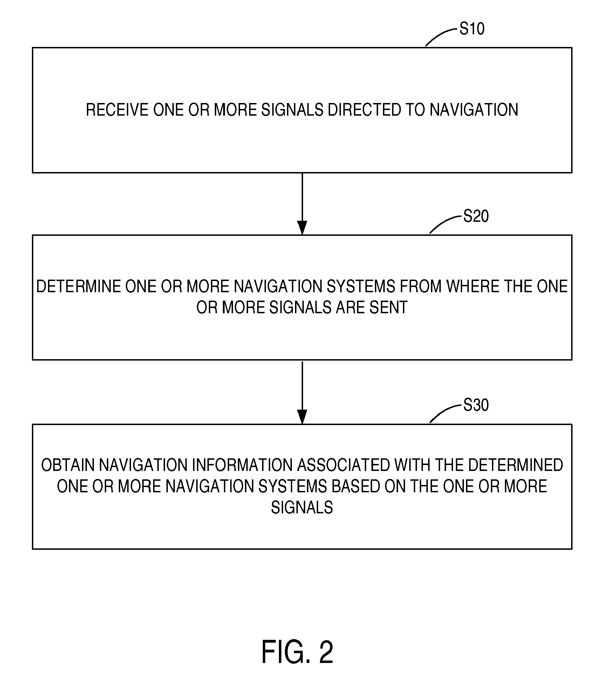

FIG. 2 is a flowchart illustrating a method for navigation, in accordance with one embodiment of the present teaching. FIG. 2 may be described in combination  with FIG. 1. Although specific processes are disclosed in FIG. 2, such processes are examples. That is, the present teaching is well suited to perform variations of the processes recited in FIG. 2.

At S10, a detection module 10 in a receiver 100 may receive one or more signals directed to navigation. At S20, one or more navigation systems may be determined. The one or more signals may be sent from the one or more navigation systems. For example, the one or more navigation systems may be different satellite navigation systems. At S30, navigation information may be obtained based on the one or more signals. The navigation information may be associated with the determined one or more navigation systems. A calculation module 20 in the receiver 100 may calculate the navigation information. The calculation module 20 may also calculate each displacement of the receiver 100 corresponding to each clock bias between the receiver and each satellite navigation system according to the satellite information received from the detected satellite navigation systems, when the satellite signals are received from more than one satellite navigation systems.

The satellite information provided by the positioning satellites can include the pseudo-range, position coordinate information, frequency information, Doppler information, ephemeris information, and velocity information of the positioning satellites, etc. The navigation information of the receiver 100 may include the position coordinate information of the receiver 100 and the velocity information of the receiver 100.

For example, the Beidou satellite signals, the GPS satellite signals and Galileo satellite signals are based on Code Division Multiple Access (CDMA) technology, and the GLONASS satellite signals are based on Frequency Division Multiple Access (FDMA) technology. Thus, the receiver 100 at S10 can detect if the received satellite signals are from one or more satellite signals. The receiver 100 may distinguish the GPS satellite signals, the Beidou satellite signals, and the Gallileo satellite signals from the received satellite signals by using I branch ordinary ranging code, and distinguish the GLONASS satellite signals from the received satellite signals according to frequency.

In one embodiment, the Beidou satellite signals and the GPS satellite signals can be expressed by an equation as the following:

$$S^j = AC^j D^j \cos(2\pi f\, t + \theta^j); \qquad (1)$$

wherein, A represents an amplitude of an ordinary ranging code modulated in I branch, C represents the I branch ordinary ranging code, D represents navigation message data in the I branch, f represents the carrier frequency of the satellite signals, t represents a transmitting time of the satellite signals, j represents an identification (ID) of a satellite, $S^j$ represents a satellite signal transmitted from a satellite with an ID of j, $\theta$ represents an initial carrier phase of each satellite signal, the value of $\theta$ can be different for each satellite. The above-mentioned parameters can be all known to the corresponding satellite. The parameters can be obtained at the receiver 100 by capturing and tracking the satellite signals. The value of f in each satellite navigation system may be different. Due to the Beidou satellite signals, the GPS satellite signals and the Galileo satellite signals can be based on Code Division Multiple Access (CDMA) technology, the transmitting frequencies of the three satellite navigation systems in the same signal segment may be the same. Since the GLONASS satellite signals can be based on FDMA technology, the GLONASS satellite signals can be distinguished according to frequency.

A pseudo-random number (PRN) of each Beidou satellite, GPS satellite, and Galileo satellite may be unique. Therefore, a type of a satellite can be determined based on the pseudo-random number sequence, i.e., the parameter C in equation (1). For the receiver 100, the available satellite signals can be captured and identified by reestablishing the pseudo-random number sequence of the satellites.

For example, the method for establishing the PRN sequence can be obtained from an Interface Control Document (ICD) of each satellite navigation system. Therefore, the receiver 100 may search for possible receiving frequency of the satellite signal and the PRN information. After receiving a satellite signal from a satellite, the receiver 100 can obtain the navigation message data D in the I branch and the initial carrier phase $\theta$ of the satellite signal. A baseband channel may establish a PRN sequence in accordance with the PRN sequence of the satellite. The receiver 100 may capture and track the satellite. If the satellite is captured and tracked successfully, the present satellite signal can be included in the input signals. In addition, only when the established PRN sequence is in accordance with the PRN sequence of the captured and tracked satellite signals, a correlation peak may be appeared with respect to the CDMA signals. For example, when the established PRN sequence is the same as the PRN sequence of the captured and tracked satellite signals, a correlation peak may be appeared with respect to the CDMA signals. Thus, the receiver 100 can detect if the satellite is captured successfully or not by detecting the correlation peak of the CDMA signals based on a capturing threshold.

The satellite can broadcast two kinds of ranging code, which are loaded on the I branch and Q branch of the satellite signals, respectively. Take the Beidou satellite navigation system for example, the I branch of the satellite signals is the civilian ordinary ranging code, and the Q branch of the satellite signals is professional accurate ranging code (for example, for military use), and the receiver 100 can only receive the Q branch after being authorized.

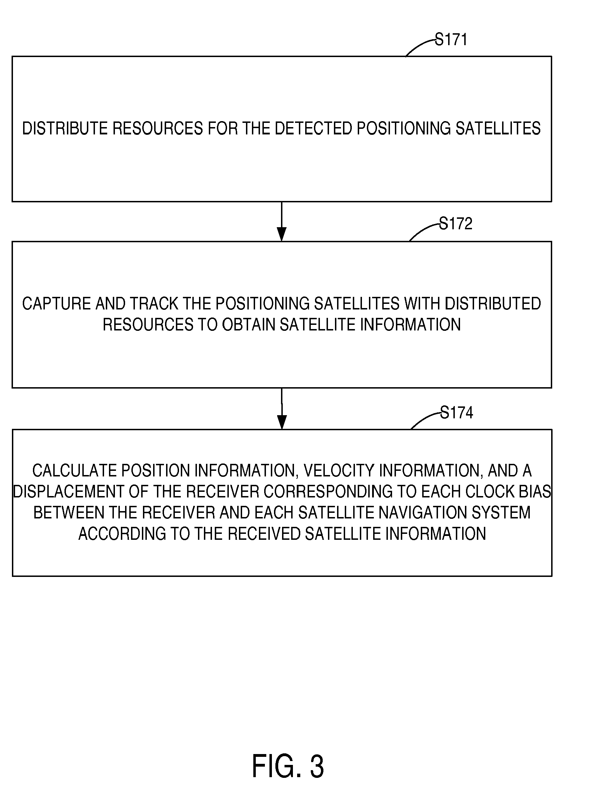

A detailed method for calculating position information of the receiver 100 will be described below in combination with FIG. 3.

FIG. 3 is a flowchart illustrating a process for navigation based on multiple satellite navigation systems, in accordance with one embodiment of the present teaching. FIG. 3 may be described in combination with FIG. 1 and FIG. 2. In one embodiment, the process in FIG. 3 may be included in S30 in FIG. 2.

The receiver 100 can distribute resources for the positioning satellites of the detected satellite navigation systems. For example, the receiver 100 may distribute resources for the positioning satellites based on visibility, performance and an environment of the positioning satellites, at S171. The distributed resources may include capturing channel and tracking channel which are hardware resources, and CPU system resources which are software resources, etc.

The visibility of the satellite can be determined based on the positioning satellite ephemeris received by the receiver 100. In other words, the receiver 100 may detect if the positioning satellite is within the sight of the receiver 100 or not. If the positioning satellite is within the sight of the receiver 100, the receiver 100 can distribute resources for the positioning satellite; otherwise, the receiver 100 may not distribute resources or may reduce distributed resources for the positioning satellite. In addition, the coded formats of the satellite signals may be different. The scanning time for the satellite signals with different formats may not be the same. If the scanning time is too long, the positioning efficiency may be deceased. Therefore, the scanning time may also be considered by the receiver 100 when the resources are distributed.

The receiver 100 may capture and track the positioning satellites with distributed resources to obtain satellite information, such as pseudo-range, position coordinate, velocity information and frequency information of each positioning satellite, etc, from the positioning satellites, at S172. The measured pseudo-range of the positioning satellite may have an error. The number of the positioning satellites can be increased when the error is acceptable, to weaken the effect of measurement errors caused by other satellites on the positioning result. Thus, the positioning accuracy can be improved. For example, the number of the positioning satellites may be 12.

At S174, the receiver 100 may calculate the position information, the velocity information of the receiver 100, and each displacement of the receiver 100 corresponding to each clock bias between the receiver 100 and each satellite navigation system according to the satellite information received at S172. The receiver 100 may calculate the position information and the displacement according to the equations as the following when the received satellite information is from k satellite navigation systems, where k is an integer and greater than 1:

$$\rho_{11} = \sqrt{(x_{11} - x_u)^2 + (y_{11} - y_u)^2 + (z_{11} - z_u)^2 + b_{u1}} \; ; \qquad (2\text{-}11)$$

$$\rho_{12} = \sqrt{(x_{12} - x_u)^2 + (y_{12} - y_u)^2 + (z_{12} - z_u)^2 + b_{u1}} \; ; \qquad (2\text{-}12)$$

......

$$\rho_{1m} = \sqrt{(x_{1m} - x_u)^2 + (y_{1m} - y_u)^2 + (z_{1m} - z_u)^2 + b_{u1}} \; ; \qquad (2\text{-}1m)$$

$$\rho_{21} = \sqrt{(x_{21} - x_u)^2 + (y_{21} - y_u)^2 + (z_{21} - z_u)^2 + b_{u2}} \; ; \qquad (2\text{-}21)$$

$$\rho_{22} = \sqrt{(x_{22} - x_u)^2 + (y_{22} - y_u)^2 + (z_{22} - z_u)^2} + b_{u2} \; ; \qquad (2\text{-}22)$$

......

$$\rho_{2n} = \sqrt{(x_{2n} - x_u)^2 + (y_{2n} - y_u)^2 + (z_{2n} - z_u)^2} + b_{u2} \; ; \qquad (2\text{-}2n)$$

$$\rho_{k1} = \sqrt{(x_{k1} - x_u)^2 + (y_{k1} - y_u)^2 + (z_{k1} - z_u)^2} + b_{uk} \; ; \qquad (2\text{-}k1)$$

$$\rho_{k2} = \sqrt{(x_{k2} - x_u)^2 + (y_{k2} - y_u)^2 + (z_{k2} - z_u)^2} + b_{uk} \; ; \qquad (2\text{-}k2)$$

......

$$\rho_{kp} = \sqrt{(x_{kp} - x_u)^2 + (y_{kp} - y_u)^2 + (z_{kp} - z_u)^2} + b_{uk} \; . \qquad (2\text{-}kp)$$

Within the above equations, $\rho_{11} \sim \rho_{1m}$ represent the pseudo-ranges of the m positioning satellites from a first satellite navigation system, respectively; $\rho_{21} \sim \rho_{2n}$ represent the pseudo-ranges of the n positioning satellites from a second satellite navigation system, respectively; $\rho_{k1} \sim \rho_{kp}$ represent the pseudo-ranges of the p positioning satellites from a kth satellite navigation system, respectively. The pseudo-ranges of the positioning satellites can be measured by the tracking loop of the receiver 100. Within the above equations, $(x_{1i}, y_{1i}, z_{1i})$ represents a position coordinate of a positioning satellite i from the first satellite navigation system, wherein $1 \le i \le m$; $(x_{2j}, y_{2j}, z_{2j})$ represents a position coordinate of a positioning satellite j from the second satellite navigation system, wherein $1 \le j \le n$; $(x_{ko}, y_{ko}, z_{ko})$ represents a position coordinate of a positioning satellite o from the kth satellite navigation system, wherein $1 \le o \le p$ and $1 \le m+n+p \le 12$. The position coordinate of each positioning satellite can be calculated according to the orbit parameters and positioning time of the corresponding positioning satellite. Within the above equations, $b_{u1}$ represents a displacement of the receiver 100 corresponding to a clock bias between the receiver 100 and the first satellite navigation system, i.e., the displacement corresponding to the clock bias between the local clock of the receiver 100 and the clock of the first satellite navigation system; similarly, $b_{u2}$ represents a displacement of the receiver 100 corresponding to a clock bias between the receiver 100 and the second satellite navigation system; $b_{uk}$ represents a displacement of the receiver 100 corresponding to a clock bias between the receiver 100 and the kth satellite navigation system; and $(x_u, y_u, z_u)$ represents a position coordinate of the receiver 100.

For example, suppose the received satellite information is from two satellite navigation systems, e.g., the Beidou satellite navigation system and the GPS system. Thus, for the above- mentioned equations, k is equal to 2, the equations (2- 11)- (2- 2n) can be used to calculate the position information of the receiver 100. In such a situation, there are five unknowns, i.e., $x_u$, $y_u$, $z_u$, $b_{u1}$ and $b_{u2}$, so that at least five positioning satellites may be needed to perform the positioning calculation.

Comparing a first situation in which satellite information is received from two satellite navigation systems with a second situation in which the satellite information is received from one satellite navigation system, the first situation may include calculating an additional displacement of the receiver 100 corresponding to a clock bias between the receiver 100 and the additional satellite navigation system to correct the calculated navigation information. Thus, the positioning accuracy may be improved in the first situation, compared to the second situation. Similarly, if the received satellite information is from three or more satellite navigation systems, each displacement of the receiver 100 corresponding to each clock bias between the receiver 100 and each satellite navigation system may be utilized to calculate the position information of the receiver 100. In addition, the Beidou satellite navigation system, the GPS system, the GLONASS satellite navigation system and the Galileo satellite navigation system can be all available for the receiver 100, i.e., the received satellite information can be from one of the above-mentioned satellite navigation system or a combination thereof.

For simplicity, the above- mentioned equations (2- 11)- (2- kp) can be established as equation (3) as following:

$$\rho_{ij} = \sqrt{(x_{ij} - x_u)^2 + (y_{ij} - y_u)^2 + (z_{ij} - z_u)^2} + b_{ui} \; ; \qquad (3)$$

wherein, $\rho_{ij}$ represents a pseudo- range of the jth positioning satellite in the ith satellite navigation system; $b_{ui}$ represents a displacement of the receiver 100 corresponding to a clock bias between the receiver 100 and the ith satellite navigation system, i.e., the displacement corresponding to the clock bias between the local clock of the receiver 100 and the clock of the ith satellite navigation system; $(x_{ij}, y_{ij}, z_{ij})$ represents a position coordinate of the jth positioning satellite in the ith satellite navigation system; and $(x_u, y_u, z_u)$ represents a position coordinate of the receiver 100.

In some regions, the number of the available positioning satellites in the satellite navigation system may be relatively low. Thus, the positioning accuracy may be decreased if using satellite information from such a satellite navigation system with relatively few available positioning satellites. If the receiver can receive satellite signals from multiple satellite navigation systems, the number of the available positioning satellites can be increased. Thus, the positioning accuracy and velocity measurement accuracy can both be improved greatly.

The velocity information of the receiver 100 can be calculated according to equation (4) as the following:

$$\frac{c(f_{ij} - f_{Tij})}{f_{Tij}} + v_{ij\_x}a_{ij\_x} + v_{ij\_y}a_{ij\_y} + v_{ij\_z}a_{ij\_z} = \dot{x}_u a_{ij\_x} + \dot{y}_u a_{ij\_y} + \dot{z}_u a_{ij\_z} - \frac{cf_{ij}\dot{t}_u}{f_{Tij}} \; ; \qquad (4)$$

wherein, $f_{ij}$ represents a receiving frequency of a satellite signal received by the receiver 100 from the jth positioning satellite in the ith satellite navigation system; $f_{Tij}$ represents a transmitting frequency of a satellite signal transmitted by the jth positioning satellite in the ith satellite navigation system. The transmitting frequencies of the satellite signals from the same satellite navigation system may be the same. For example, if the ith satellite navigation system includes three satellites, then, $f_{Ti1} = f_{Ti2} = f_{Ti3}$. For example, the transmitting frequency of the satellite signals B1 from the Beidou satellite can be 1.561098e9Hz, the transmitting frequency of the satellite signals L1 from the GPS satellite can be 1.57542e9Hz. In this embodiment, the receiving frequency and the transmitting frequency may be included in the frequency information. In equation (4), c represents the velocity of light, wherein c=2.99792458e8m/s; $(v_{ij\_x}, v_{ij\_y}, v_{ij\_z})$ represents a velocity vector of the jth positioning satellite in the ith satellite navigation system and can be calculated according to the positioning satellite ephemeris and a present time; $(a_{ij\_x}, a_{ij\_y}, a_{ij\_z})$ represents a direction vector of the jth positioning satellite in the ith satellite navigation system relative to the receiver 100, and $a_{ij\_x} = (x_{ij} - x_u)/r$, $a_{ij\_y} = (y_{ij} - y_u)/r$, $a_{ij\_z} = (z_{ij} - z_u)/r$, wherein r represents a distance from the receiver 100 to the jth positioning satellite in the ith satellite navigation system; $(x_{ij}, y_{ij}, z_{ij})$ represents a position coordinate of the jth positioning satellite in the ith satellite navigation system; $(x_u, y_u, z_u)$ represents a position coordinate of the receiver; $(\dot{x}_u, \dot{y}_u, \dot{z}_u)$ represents a velocity vector of the receiver; and $\dot{t}_u$ represents a timing variation rate of the clock in the receiver 100, i.e., the rate of clock variation in the receiver 100. It may be assumed that the clock in the satellite navigation system is stable, so that the timing variation rate can be related to the clock of the receiver 100. The timing variation rate may be the first derivative of the clock bias between the receiver 100 and the satellite navigation system.

After the position information and the velocity information of the receiver 100 are calculated according to the above-mentioned equations, the receiver 100 can generate a navigation path for navigation.

In one example, when there are relatively few errors in the measurements of the satellite pseudo-ranges and Doppler measurements, the accuracy of the positioning calculation can be increased by increasing the number of the positioning satellites. If the tracking quality of the satellites is poor, for example, there may be many measurement errors in the satellite pseudo-ranges and Doppler measurements in the satellite information provided by the satellites. In that situation, the positioning accuracy can be decreased when the number of the positioning satellites is increased. Therefore, it may be necessary to identify the positioning satellites which provide the satellite information (e.g., pseudo range and Doppler measurement) with many errors.

Therefore, another process S173 (not shown in FIG. 3) can be performed after performing S172 and before performing S174. The identification unit in the calculation module 20 of the receiver 100 may identify the redundant positioning satellites in each satellite navigation system according to the received satellite information. The satellite signals from the identified redundant satellites may be abandoned and may not be used to calculate the position of the receiver 100. For example, the identification unit can identify the positioning satellites that provide the satellite information (e.g., pseudo range and Doppler measurement) with many errors as the redundant satellites. In one embodiment, the redundant satellites can be identified according to a method of Receiver Autonomous Integrity Monitoring (RAIM). The identification unit can also identify the redundant satellites according to output parameters of each receiver loop, e.g., the variation of the carrier frequency, the variation of the pseudo range measurement, etc.

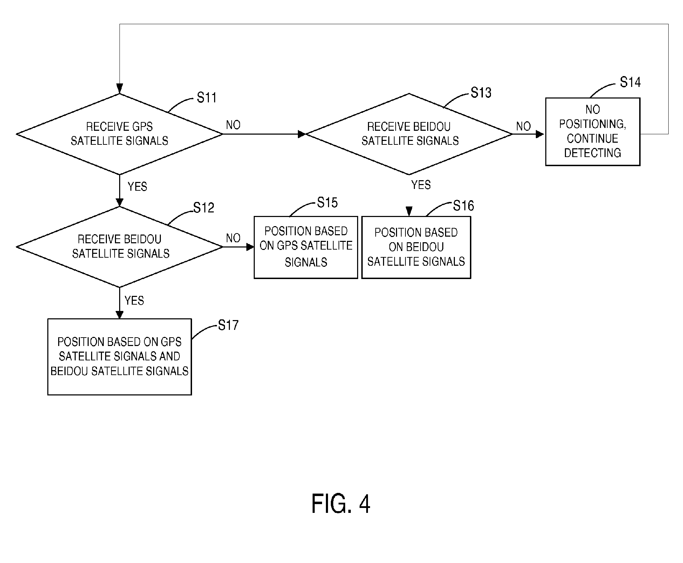

FIG. 4 is a flowchart illustrating an exemplary method for navigation, in accordance with one embodiment of the present teaching. Taking an example of BeiDou (Compass) satellite navigation system and Global Positioning System (GPS), FIG. 4 may be described in combination with FIG. 1.

The detection module 10 in the receiver 100 may receive the GPS satellite signals, at S11. If the receiver 100 receives the GPS satellite signals, the detection module 10 may further detect if the receiver 100 receives the Beidou satellite signals, at S12. Otherwise, if the receiver 100 does not receive the GPS satellite signals, the detection module 10 in the receiver 100 may still detect if the Beidou satellite signals are received, at S13. If no satellite signals are received from either GPS system or BeiDou system, at S14, no position may be performed and the detection module 10 may continue detecting satellite signals, i.e., moving back to S11 again.

As the Beidou satellite signals and the GPS satellite signals are based on Code Division Multiple Access (CDMA) technology, the receiver 100 can distinguish the GPS satellite signals and the Beidou satellites from the received satellite signals by using I branch ordinary ranging code at S11, S12, and S13, respectively.

If the receiver 100 is detected to receive the GPS satellite signals, but not the Beidou satellite signals, the receiver 100 can perform positioning in a single mode based on the GPS satellite signals, at S15. If the receiver 100 does not receive the GPS satellite signals, but receives the Beidou satellite signals, the receiver 100 may perform positioning in a single mode based on the Beidou satellite signals, at S16.

At S16 for example, when the receiver 100 receives the Beidou satellite signals, the position information of the receiver 100 and the displacement of the receiver 100 corresponding to a clock bias between the receiver 100 and the Beidou satellite navigation system can be calculated according to the equations (5- 1)- (5- m) as the following:

$$\rho_1 = \sqrt{(x_1 - x_u)^2 + (y_1 - y_u)^2 + (z_1 - z_u)^2 + b_u} \; ; \qquad (5\text{-}1)$$

$$\rho_2 = \sqrt{(x_2 - x_u)^2 + (y_2 - y_u)^2 + (z_2 - z_u)^2 + b_u} \; ; \qquad (5\text{-}2)$$

……

$$\rho_n = \sqrt{(x_n - x_u)^2 + (y_n - y_u)^2 + (z_n - z_u)^2 + b_u} \; ; \qquad (5\text{-}m)$$

wherein, $\rho_1 \sim \rho_n$ represent pseudo- ranges of n Beidou positioning satellites, respectively, and $\rho_1 \sim \rho_n$ can be calculated by the tracking loop of the receiver 100; $(x_i, y_i, z_i)$ represents the position coordinate of the ith Beidou positioning satellite, wherein $1 \le i \le n$. The $(x_i, y_i, z_i)$ can be calculated according to the orbit parameters and the positioning time of the ith Beidou positioning satellite. The orbit parameters can be obtained by demodulating navigation message data D on the I branch and analyzing and collecting the ICD document of the satellite navigation system after the satellite signals are tracked and locked. The coordinate $(x_i, y_i, z_i)$ may be an Earth- centered Earth- fixed (ECEF) coordinate. In the Earth-centered Earth- fixed (ECEF) coordinate system, the Earth's center represents the origin point of the coordinate. Z axis points to Northward along the Earth's rotation axis direction; X axis points to the latitude and longitude position (0, 0) ; and Y axis points to 90 degree longitude, wherein the X axis, Y axis and Z axis consist of a right- handed coordinate system. In the equations (5- 1)- (5- m), $b_u$ represents a displacement of the receiver 100 corresponding to the clock bias between the receiver 100 and the Beidou satellite navigation system; $(x_u, y_u, z_u)$ represents a position coordinate of the receiver 100. There are four unknowns in equations (5- 1)- (5- m), i.e., $x_u$, $y_u$, $z_u$ and $b_u$. The four unknowns can be calculated according to the satellite information from at least four Beidou positioning satellites.

If the receiver 100 receives not only the GPS satellite signals but also the Beidou satellite signals, the receiver 100 can perform positioning in a dual mode, at S17, i.e., the receiver 100 can perform positioning according to the GPS satellite signals and the Beidou satellite signals simultaneously at S17. The receiver 100 can calculate the position information according to the equations (2- 11)- (2- 2n) . In such a situation, there are five unknowns, i.e., $x_u$, $y_u$, $z_u$, $b_{u1}$ and $b_{u2}$, so that at least five positioning satellites may be needed to perform the positioning calculation.

It can be understood that such description is for illustrative purpose only and does not intend to limit the scope of the present teaching. It can be understood that, the detection module 10 can further detect if the received satellite signals are Galileo satellite signals, or GLONASS satellite signals. It can also be understood that the order for detecting the satellite signals from different satellite navigation systems can be randomly selected and may not be limited to the disclosed order in the above example.

Aspects of the method for navigation, as outlined above, may be embodied in programming. Program aspects of the technology may be thought of as "products" or "articles of manufacture" typically in the form of executable code and/or associated data that is carried on or embodied in a type of machine readable medium. Tangible non-transitory "storage" type media include any or all of the memory or other storage for the computers, processors or the like, or associated modules thereof, such as various semiconductor memories, tape drives, disk drives and the like, which may provide storage at any time for the software programming.

All or portions of the software may at times be communicated through a network such as the Internet or various other telecommunication networks. Such communications, for example, may enable loading of the software from one computer or processor into another. Thus, another type of media that may bear the software elements includes optical, electrical, and electromagnetic waves, such as used across physical interfaces between local devices, through wired and optical landline networks and over various air-links. The physical elements that carry such waves, such as wired or wireless links, optical links or the like, also may be considered as media bearing the software. As used herein, unless restricted to tangible "storage" media, terms such as computer or machine "readable medium" refer to any medium that participates in providing instructions to a processor for execution.

Hence, a machine readable medium may take many forms, including but not limited to, a tangible storage medium, a carrier wave medium or physical transmission medium. Non- volatile storage media include, for example, optical or magnetic disks, such as any of the storage devices in any computer (s) or the like, which may be used to implement the system or any of its components as shown in the  drawings. Volatile storage media include dynamic memory, such as a main memory of such a computer platform. Tangible transmission media include coaxial cables; copper wire and fiber optics, including the wires that form a bus within a computer system. Carrier- wave transmission media can take the form of electric or electromagnetic signals, or acoustic or light waves such as those generated during radio frequency (RF) and infrared (IR) data communications. Common forms of computer- readable media therefore include for example: a floppy disk, a flexible disk, hard disk, magnetic tape, any other magnetic medium, a CD- ROM, DVD or DVD- ROM, any other optical medium, punch cards paper tape, any other physical storage medium with patterns of holes, a RAM, a PROM and EPROM, a FLASH- EPROM, any other memory chip or cartridge, a carrier wave transporting data or instructions, cables or links transporting such a carrier wave, or any other medium from which a computer can read programming code and/or data. Many of these forms of computer readable media may be involved in carrying one or more sequences of one or more instructions to a processor for execution.

While the foregoing description and drawings represent embodiments of the present teaching, it will be understood that various additions, modifications, and substitutions may be made therein without departing from the spirit and scope of the principles of the present teaching as defined in the accompanying claims. One skilled in the art will appreciate that the present teaching may be used with many modifications of form, structure, arrangement, proportions, materials, elements, and components and otherwise, used in the practice of the disclosure, which are particularly adapted to specific environments and operative requirements without departing from the principles of the present teaching. The presently disclosed embodiments are therefore to be considered in all respects as illustrative and not restrictive, the scope of the present  teaching being indicated by the appended claims and their legal equivalents, and not limited to the foregoing description.

## Claims

1.    A method for navigation, comprising the steps of:

receiving one or more signals directed to navigation;
determining one or more navigation systems from where the one or more signals are sent; and
obtaining navigation information associated with the determined one or more navigation systems based on the one or more signals.

2.    The method of claim 1, wherein:

the one or more navigation systems comprise at least two satellite navigation systems; and
the one or more signals comprise at least two satellite signals received at a receiver and sent from satellites associated with the at least two satellite navigation systems.

3.    The method of claim 1 or 2, further comprising obtaining a displacement corresponding to a clock bias between the receiver and a satellite navigation system, based on the at least two satellite signals.

4.    The method of one of claims 1 to 3, wherein the step of obtaining navigation information further comprises:

distributing resources for the satellites in each satellite navigation system;
capturing and tracking the satellites with the distributed resources to obtain satellite information of each satellite;

and

calculating the navigation information associated with the receiver based on the satellite information.

5. The method of claim 4, wherein:

the navigation information comprises position information of the receiver;
the position information is obtained based on the satellite information; and
the satellite information includes pseudo-ranges of the satellites and position coordinates of the satellites.

6. The method of claim 5, wherein:

the navigation information further comprises velocity information of the receiver;
the velocity information is obtained based on the satellite information and the position information of the receiver; and
the satellite information includes frequency information, velocity vectors of the satellites, and position coordinates of the satellites.

7. The method of claim 6, wherein the frequency information comprises a receiving frequency of the satellite signals and a transmitting frequency of the satellite signals.

8. The method of one of claims 1 to 7, wherein the step of determining one or more navigation systems further comprises:

determining if the one or more signals are sent from the Beidou satellite navigation system, the Global Positioning System (GPS) or the Galileo satellite navigation system according to an I branch ordinary ranging code of the one or more signals; and
determining if the one or more signals are sent from the GLONASS satellite navigation system according to frequencies of the one or more signals.

9. The method of one of claims 1 to 8, further comprising:

identifying one or more redundant satellites in the one or more navigation systems based on the one or more signals; and
abandoning signals sent from the redundant satellites.

10. A system for navigation, comprising:

a detection module configured for
receiving one or more signals directed to navigation, and
determining one or more navigation systems from where the one or more signals are sent;
a calculation module configured for obtaining navigation information associated with the determined one or more navigation systems based on the one or more signals.

11. The system of claim 10, wherein:

the one or more navigation systems comprise at least two satellite navigation systems; and
the one or more signals comprise at least two satellite signals received at a receiver and sent from satellites associated with the at least two satellite navigation systems.

12. The system of claim 10 or 11, wherein the calculation module is further configured for obtaining a displacement corresponding to a clock bias between the receiver and each satellite navigation system, based on the at least two satellite signals.

13. The system of claim 10, 11 or 12, wherein the calculation module comprises:

a distribution unit configured for distributing resources to satellites in each satellite navigation system;
a capturing and tracking unit configured for capturing and tracking the satellites with the distributed resources to obtain satellite information of each satellite; and
a calculation unit configured for calculating the navigation information a associated with the receiver based on the satellite signals.

**14.** The system of one of claims 10 to 13, wherein:

the navigation information comprises position information of the receiver;
the position information is obtained based on the satellite information; and
the satellite information includes pseudo-ranges of the satellites and position coordinates of the satellites.

**15.** The system of claim 14, wherein:

the navigation information further comprises velocity information of the receiver;
the velocity information is obtained based on the satellite information and the position information of the receiver; and
the satellite information includes frequency information, velocity vectors of the satellites, and position coordinates of the satellites.

**16.** The system of one of claims 10 to 15, wherein the calculation module further comprises an identification unit configured for
identifying one or more redundant satellites in the one or more navigation systems based on the one or more signals; and
abandoning signals sent from the redundant satellites.

**17.** The system of one of claims 10 to 16, wherein the detection module is further configured for
determining if the one or more signals are sent from the Beidou satellite navigation system, the Global Positioning System (GPS) or the Galileo satellite navigation system according to an I branch ordinary ranging code of the one or more signals; and
determining if the one or more signals are sent from the GLONASS satellite navigation system according to the frequencies of the one or more signals.

**18.** A machine-readable tangible and non-transitory medium having information recorded thereon for navigation, wherein the information, when read by the machine, causes the machine to perform the following:

receiving one or more signals directed to navigation;
determining one or more navigation systems from where the one or more signals are sent; and
obtaining navigation information associated with the determined one or more navigation systems based on the one or more signals.

100

20

DISTRIBUTION UNIT — 21

10

DETECTION
MODULE

CAPTURING AND
TRACKING UNIT — 22

CALCULATION UNIT — 23

CALCULATION MODULE

RECEIVER

FIG. 1

S10

RECEIVE ONE OR MORE SIGNALS DIRECTED TO NAVIGATION

S20

DETERMINE ONE OR MORE NAVIGATION SYSTEMS FROM WHERE THE ONE OR MORE SIGNALS ARE SENT

S30

OBTAIN NAVIGATION INFORMATION ASSOCIATED WITH THE DETERMINED ONE OR MORE NAVIGATION SYSTEMS BASED ON THE ONE OR MORE SIGNALS

FIG. 2

S171

DISTRIBUTE RESOURCES FOR THE DETECTED POSITIONING SATELLITES

S172

CAPTURE AND TRACK THE POSITIONING SATELLITES WITH DISTRIBUTED RESOURCES TO OBTAIN SATELLITE INFORMATION

S174

CALCULATE POSITION INFORMATION, VELOCITY INFORMATION, AND A DISPLACEMENT OF THE RECEIVER CORRESPONDING TO EACH CLOCK BIAS BETWEEN THE RECEIVER AND EACH SATELLITE NAVIGATION SYSTEM ACCORDING TO THE RECEIVED SATELLITE INFORMATION

FIG. 3

S11 RECEIVE GPS SATELLITE SIGNALS — NO → S13 RECEIVE BEIDOU SATELLITE SIGNALS — NO → S14 NO POSITIONING, CONTINUE DETECTING

S11 RECEIVE GPS SATELLITE SIGNALS — YES → S12 RECEIVE BEIDOU SATELLITE SIGNALS

S12 RECEIVE BEIDOU SATELLITE SIGNALS — NO → S15 POSITION BASED ON GPS SATELLITE SIGNALS

S13 RECEIVE BEIDOU SATELLITE SIGNALS — YES → S16 POSITION BASED ON BEIDOU SATELLITE SIGNALS

S12 RECEIVE BEIDOU SATELLITE SIGNALS — YES → S17 POSITION BASED ON GPS SATELLITE SIGNALS AND BEIDOU SATELLITE SIGNALS

FIG. 4

EP 2 645 129 A1

Europäisches
Patentamt

European
Patent Office

Office européen
des brevets

**EUROPEAN SEARCH REPORT**

Application Number

EP 13 16 0983

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 095 368 B1 (VAN DIGGELEN FRANK [US]) 22 August 2006 (2006-08-22) * paragraphs [0018] - [0021], [0024], [0026] - [0028] * * paragraph [0032] * * paragraphs [0041], [0043] * | 1-18 | INV. G01S19/42 |
| X | US 2011/102253 A1 (MORRISON WILLIAM JAMES [US]) 5 May 2011 (2011-05-05) * paragraphs [0007], [0008] * * paragraphs [0017] - [0019] * * paragraphs [0023] - [0027] * * paragraph [0035] * * paragraphs [0048] - [0049] * * paragraphs [0051], [0060] - [0061] * | 1-18 | |
| X | WO 2007/082038 A1 (QUALCOMM INC [US]; FISCHER SVEN [DE]; GAAL PETER [US]) 19 July 2007 (2007-07-19) * paragraph [0009] * * paragraphs [0027] - [0032] * * paragraphs [0047], [0052], [0055], [0059] * * paragraph [0066] * * paragraphs [0071] - [0074], [0077] - [0086] * | 1-18 | TECHNICAL FIELDS SEARCHED (IPC)  G01S |
| X | US 2012/050097 A1 (ZHANG YUFENG [CA] ET AL) 1 March 2012 (2012-03-01) * paragraphs [0006], [0008] * * paragraphs [0046], [0047] * * paragraph [0050] * | 1-18 | |
| X | US 2011/193744 A1 (WARLOE ANDREAS [US] ET AL) 11 August 2011 (2011-08-11) * paragraphs [0013] - [0016] * * paragraphs [0022], [0032], [0039], [0040] * | 1-18 | |

The present search report has been drawn up for all claims

| Place of search | Date of completion of the search | Examiner |
|---|---|---|
| The Hague | 25 June 2013 | Naddeo, Giovanni |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 13 16 0983

This annex lists the patent family members relating to the patent documents cited in the above-mentioned European search report.
The members are as contained in the European Patent Office EDP file on
The European Patent Office is in no way liable for these particulars which are merely given for the purpose of information.

25-06-2013

| Patent document cited in search report | | Publication date | Patent family member(s) | | Publication date |
|---|---|---|---|---|---|
| US 7095368 | B1 | 22-08-2006 | CN | 101600970 A | 09-12-2009 |
| | | | EP | 1864152 A2 | 12-12-2007 |
| | | | HK | 1137514 A1 | 05-10-2012 |
| | | | KR | 20070114321 A | 30-11-2007 |
| | | | US | 7095368 B1 | 22-08-2006 |
| | | | US | 2007085732 A1 | 19-04-2007 |
| | | | US | 2010103039 A1 | 29-04-2010 |
| | | | US | 2012268320 A1 | 25-10-2012 |
| | | | WO | 2007086894 A2 | 02-08-2007 |
| US 2011102253 | A1 | 05-05-2011 | CN | 102597804 A | 18-07-2012 |
| | | | EP | 2496962 A2 | 12-09-2012 |
| | | | JP | 2013510319 A | 21-03-2013 |
| | | | KR | 20120076390 A | 09-07-2012 |
| | | | TW | 201140116 A | 16-11-2011 |
| | | | US | 2011102253 A1 | 05-05-2011 |
| | | | WO | 2011056876 A2 | 12-05-2011 |
| WO 2007082038 | A1 | 19-07-2007 | CN | 101365957 A | 11-02-2009 |
| | | | EP | 1971876 A1 | 24-09-2008 |
| | | | EP | 2423710 A1 | 29-02-2012 |
| | | | JP | 2009523247 A | 18-06-2009 |
| | | | JP | 2012123008 A | 28-06-2012 |
| | | | KR | 20080108419 A | 15-12-2008 |
| | | | US | 2007275658 A1 | 29-11-2007 |
| | | | US | 2011187589 A1 | 04-08-2011 |
| | | | WO | 2007082038 A1 | 19-07-2007 |
| US 2012050097 | A1 | 01-03-2012 | NONE | | |
| US 2011193744 | A1 | 11-08-2011 | US | 2011193744 A1 | 11-08-2011 |
| | | | US | 2012306696 A1 | 06-12-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201210092729